# EUROPÄISCHE PATENTSCHRIFT

(11) **EP 0 978 496 B1**
(45) Veröffentlichungstag und Bekanntmachung des Hinweises auf die Patenterteilung: **13.03.2002**
(21) Anmeldenummer: 99115242.2
(22) Anmeldetag: 02.08.1999
(51) Int. Cl.: C04B 35/66, C04B 35/18, C03B 18/16

(54) **Grossformatiger Schamottestein, insbesondere Zinnbadbodenstein, und Verfahren zu seiner Herstellung**
Large chamotte brick particularly for use as a hearth block in a tin bath and method for its manufacture
Brique en chamotte de grand format, en particulier pour le fond d'un bain d'étain, et son procédé de fabrication

(30) Priorität: 04.08.1998 DE 19835143
(43) Veröffentlichungstag der Anmeldung: 09.02.2000
(73) Patentinhaber: Vesuvius VGT Dyko GmbH, 40549 Düsseldorf (DE)
(72) Erfinder: Petschauer, Hans, 37247 Grossalmerode (DE); Gebhardt, Franz, Prof. Dr., 52146 Würselen (DE)
(74) Vertreter: Patentanwälte Rehberg + Hüppe

(56) Entgegenhaltungen:
- EP-A- 0 558 939
- WO-A-96/09999
- DE-A- 4 304 765

## Beschreibung

Die Erfindung betrifft einen großformatigen Schamottestein, insbesondere Zinnbadbodenstein, aus einem Werkstoff des Systems Al₂O₃ - SiO₂, aus einem blockartigen Grundkörper mit einer mit dem Zinnbad in Kontakt kommenden Oberfläche. Solche großformatigen Schamottesteine besitzen streng quaderförmige Gestalt mit einer dem Zinnbad abgekehrten Oberfläche, vier Seitenflächen und einer mit dem Zinnbad in Kontakt kommenden Oberfläche. Sämtliche sechs Flächen dieser großformatigen Schamottesteine werden in einem Schleifvorgang nach dem Brennen auf Endmaß fertig bearbeitet, wobei sie die gewünschten Abmessungen erhalten.

Solche großformatigen Schamottesteine, die der Auskleidung einer Wanne für ein Zinnbad dienen und aus einem Werkstoff des Systems Al₂O₃ - SiO₂ bestehen, sind aus der DE 42 06 734 C2 bekannt. Der Zinnbadbodenstein weist 33 bis 43 Gew.-% Al₂O₃, 1 bis 3 Gew.-% Alkalioxid, eine Druckfestigkeit von 35 bis 60 N/mm², einen Druckelastizitätsmodul von 3000 bis 10000 N/mm², eine offene Porosität von 19,7 bis 25 Vol.-%, eine Gasdurchlässigkeit von unter 3 nPm und eine Wasserstoffdiffusion von < 1.471,5 Pa auf. Der hier interessierende Teil der Glasherstellungsanlage besitzt im unteren Bereich eine Stahlwanne, die mit den großformatigen Schamottesteinen ausgekleidet ist. Dabei entsteht eine Wanne, die mit flüssigem Zinn gefüllt wird. Auf das Zinn wird das schmelzflüssige Glas aufgegossen, welches auf der Oberfläche des Zinnbades ausläuft und als dünnes, breites Band über das Zinnbad abgezogen wird. Auf diese Weise wird bekanntlich Flachglas hergestellt. Das Flachglas enthält bis zu 15 % Na₂O. An der Berührungsfläche zwischen dem Glas und dem flüssigen Zinn diffundiert Na₂O in das flüssige Metall. Im Zinnbad liegen nun Natrium und atomarer Sauerstoff gelöst vor. Die Löslichkeit von Natrium und atomarem Sauerstoff in Zinn ist eine Funktion der Temperatur. Bei der Herstellung von Flachglas herrschen in der Anlage je nach Meßort Temperaturen in der Größenordnung von 1200 °C - 600 °C. Aufgrund der thermisch und mechanisch induzierten Strömungen des flüssigen Zinns im Zinnbad werden mit Natrium beladene Volumenteile des Zinns an die mit dem Zinnbad in Kontakt kommende Oberfläche des blockartigen Grundkörpers des Schamottesteins herangetragen. So kommt es zu einem Austausch von Natrium zwischen dem Zinn und dem feuerfesten Werkstoff des Schamottesteins. Das atomare Natrium dringt in das feuerfeste Material ein und reagiert dort zuerst mit dem Siliziumdioxid der Glasphase der Schamottesteine unter Bildung von Natriumoxid. Durch die Reduktion von siliziumdioxidhaltigen Phasen erfahren die reduzierten Anteile des Schamottesteins eine graue bis schwarze Färbung.

Die bekannten Schamottesteine, die in derartigen Glasherstellungsanlagen eingesetzt werden, können eine Länge von 1000 mm, eine Breite von 600 mm und eine Höhe von 300 mm aufweisen. Sie werden aus Schamottekörnern unterschiedlicher Kornverteilung, Ton und Alkalialumosilikat aufgebaut. Nach dem Brand liegen mineralogisch gesehen hauptsächlich Mullit, etwas Cristobalit und eine Glasphase vor. Der Anteil an Glasphase eines solchen Schamottesteins wird durch den Gehalt an Natrium- und Kaliumoxid bestimmt. Ebenso beeinflussen diese Oxide wesentlich die chemische Zusammensetzung der Glasphase. Das Verhältnis von Al₂O₃ zu SiO₂ in dem Schamottestein entscheidet darüber, welche Alkalialumosilikate - Nephelin oder Albit - bei dem Angriff von metallischem Natrium in oberflächennahen Schichten des Schamottesteins gebildet werden. Der thermische Ausdehnungskoeffizient von Nephelin ist ca. dreifach größer als der Ausdehnungskoeffizient von Mullit. Es kommt daher zu einer Vergrößerung und zu einem Wachsen der Schichten im Schamottestein, die benachbart zu der mit dem Zinnbad in Kontakt kommenden Oberfläche sind. Dabei stützen sich diese Schichten infolge der streng quaderförmigen Gestalt der Schamottesteine im Verbund aneinander ab. Es entstehen entsprechende Spannungen.

Andererseits ist es erforderlich, die Fugen zwischen den auch im Bereich ihrer Seitenflächen glattgeschliffenen Oberflächen der Schamottesteine im Verband möglichst klein und damit dicht zu halten, damit das flüssige Zinn nicht durch diese Fugen nach unten hindurchtritt, wobei es zu einer Zerstörung der die Schamottesteine aufnehmenden Stahlwanne kommen kann. Da sich ein Eindringen des flüssigen Zinns in die Fuge nicht mit Sicherheit und nicht in allen Fällen vermeiden läßt, wird die Stahlwanne außen gekühlt, um durchdringendes Zinn in den festen Zustand zu überführen.

Durch die Volumenvergrößerung der Schichten im Bereich der mit dem Zinnbad in Kontakt kommenden Oberfläche der Schamottesteine kommt es zu Abplatzungen im Bereich dieser Schichten, die sich bevorzugt in den Eck- und Kantenbereichen der mit dem Zinnbad in Kontakt kommenden Oberfläche bilden. Da das keramische Material des Schamottesteins ein geringeres spezifisches Gewicht als Zinn aufweist, kommt es zu einem Aufschwimmen dieser abgeplatzten Bestandteile der Schamottesteine im Zinnbad. Dies kann zu erheblichen Produktionsstörungen bei der Glasherstellung führen.

Aus der DE 195 49 057 C1 ist ein Schamottestein bekannt, bei dem die mit dem Zinnbad in Kontakt kommende Oberfläche des blockartigen Grundkörpers eine Alkalisilikat enthaltende Beschichtung aufweist, um in der Beschichtung im Vergleich zum Werkstoff des Schamottesteins durch ein verringertes Al₂O₃-Angebot und ein vergrößertes Alkali- und Kieselsäure-Angebot eine zur Glasurbildung neigende und als Reaktand für Na aus dem Zinnbad wirkende Sperrschicht auf der Oberfläche des Grundkörpers zu bilden. Damit wird die Feldspatbildung oder Feldspatvertreterbildung erheblich reduziert, um Abplatzerscheinungen bei seinem Einsatz als Auskleidung für ein Zinnbad entgegenzuwirken. Durch die Anordnung einer Beschichtung auf der mit dem Zinnbad in Kontakt kommenden Oberfläche des Grundkörpers, also zumindest auf einer Hauptfläche oben und ggf. auch über Seitenflächenbereiche des Grundkörpers hinweg, wird letztlich aus der Beschichtung eine dünne Glasur gebildet. Die Alkalien werden als Flußmittel genutzt, insbesondere in Verbindung mit einem erhöhten Anteil SiO₂. Die Beschichtung kann in ihrer einfachsten Form aus einem Anstrich, einem Auftrag mit abschließendem Abrakeln, einem Aufsprühen o. dgl. bestehen. Die aus der Beschichtung entstehende Glasur soll nur Bruchteile eines mm dick sein, aber andererseits in den Poren der Oberfläche festhaftend verankert sein. Die Glasurbildung wird begünstigt bzw. ermöglicht durch ein Überangebot an Alkali und Kieselsäure in der dünnen Schicht der Beschichtung und erreicht damit selbst auch nur eine geringe Dicke, die klein genug ist, um Ablöse- und Aufschwimmerscheinungen von Glasurstücken - sog. Kaulquappen - im Zinnbad zu vermeiden. Die Beschichtung und die sich daraus bildende Glasur wirken als Reaktand und bilden eine reaktionsverzögernde Sperrschicht für atomares Natrium, so daß dieses aus dem Zinnbad zwar in die Schicht der Beschichtung oder Glasur, nicht aber in tieferliegende Matrixbereiche des Werkstoffs des Grundkörpers einwandern kann. Die Wirkung der Sperrschicht beruht auch darauf, daß bei der Aufbringung der Beschichtung offene Poren ausgefüllt und insoweit eine mechanische Sperrwirkung erreicht wird. Gleichzeitig wird damit die Beschichtung in den Poren der Oberfläche des Grundkörpers festhaftend verankert. Durch die Beschränkung der Beschichtung auf eine dünne Schicht werden Schichtabmessungen vermieden, wie sie für abplatzende und im Zinnbad aufschwimmende Schichtstücke im Stand der Technik typisch sind. Das Aufbringen der Beschichtung stellt jedoch einen zusätzlichen Arbeitsschritt dar, der die Herstellung des Schamottesteins verteuert. Auch ist die Dicke der entstehenden Glasurschicht schwer beherrschbar.

Der Erfindung liegt die Aufgabe zugrunde, einen großformatigen Schamottestein der eingangs beschriebenen Art bereitzustellen, bei dem die Neigung zu Ablöse- und Aufschwimmerscheinungen von Glasurstücken - sog. Kaulquappen - weiter reduziert ist, so daß der Schamottestein eine im Vergleich zum Stand der Technik verlängerte Einsatzdauer ermöglicht.

Erfindungsgemäß wird dies bei dem Schamottestein der eingangs beschriebenen Art dadurch erreicht, daß der Werkstoff einen Feinkornbereich von < 0,075 mm mit > 65 Gew.-% SiO₂ und < 35 Gew.-% Al₂O₃ aufweist, der durch ein verringertes Al₂O₃-Angebot und ein vergrößertes Alkali- und Kieselsäure-Angebot zur Bildung einer Glasphase in diesem Feinkornbereich dient, und daß der Werkstoff einen Grobkornbereich (Grob- und Mittelkornbereich) von > 1,500 mm mit < 65 Gew.-% SiO₂ und > 35 Gew.-% Al₂O₃ aufweist, um im Grobkorn eine verringerte Glasphasenbildung zu erreichen.

Der Werkstoff kann insbesondere einen Feinkornbereich in einem Anteil von > 50 Gew.-% mit etwa 65 bis 95 Gew.-% SiO₂ und etwa 35 bis 5 Gew.-% Al₂O₃ aufweisen. Insbesondere kann der Werkstoff einen Grobkornbereich mit etwa 35 bis 65 Gew.-% SiO₂ und etwa 65 bis 35 Gew.-% Al₂O₃ aufweisen. Es versteht sich, daß Verunreinigungen unvermeidbar sind und entsprechend berücksichtigt werden müssen.

Die Erfindung geht damit von dem Gedanken aus, bei der Herstellung des Schamottesteins zwei unterschiedliche Fraktionen einzusetzen, die zunächst getrennt voneinander hergestellt werden. Es handelt sich um einen Feinkornbereich einerseits und einen Grobkornbereich andererseits. Diese beiden Fraktionen reagieren unterschiedlich auf das in den Schamottestein bei Betrieb eindiffundierende Natrium:

Im Feinkornbereich ist der SiO₂-Anteil relativ hoch und der Al₂O₃-Anteil relativ niedrig. Es wird hier bewußt eine Albitbildung (Na₂O.Al₂O₃.6.SiO₂) angestrebt, um hier den vergleichsweise niedrigen Ausdehnungskoeffizienten von Albit (7,3.10⁻⁶ K⁻¹) zu nutzen. Unter entsprechender Temperatureinwirkung im Betrieb der Glaswanne bildet sich eine Glasphase, also eine Glasur, die sich nicht nur in der Oberfläche des Steins sondern auch im Stein auswirkt. Im Feinkornbereich wird eine Albitbildung begünstigt und eine Nephelinbildung unterdrückt bzw. verzögert. Das Feinkorn umgibt das Grobkorn und bildet mit seiner Glasphase eine albitische Umhüllung des Grobkorns, die die Einwanderung des Natriums unter Betriebsbedingungen in das Grobkorn verzögert. Die albitische Umhüllung bildet gleichsam eine Mikro-Sperrschicht. Da Albit einen Schmelzpunkt von 1118 °C hat, wird die Glasphase unter Betriebsbedingungen an manchen Stellen im Stein erreicht, an anderen Stellen nicht. An den Stellen, an denen das Albit flüssig ist, stört es ohnehin nicht. An den anderen Stellen erbringt es günstigere Eigenschaften als Nephelin.

Es wird ein Grobkorn eingesetzt, welches einen vergleichsweise höheren Al₂O₃-Gehalt und einen vergleichsweise niedrigeren SiO₂-Gehalt aufweist. In der Oberfläche dieses Grobkorns bildet sich aufgrund der Zusammensetzung Nephelin (Na₂O.Al₂O₃.2.SiO₂), und zwar unter Volumenvergrößerung und den entsprechenden Wärmeausdehnungserscheinungen. Aufgrund des vergleichsweise hohen Ausdehnungskoeffizienten (17,4.10⁻⁶ K⁻¹) ist die Nephelinbildung an sich unerwünscht, aber letztlich unter Langzeitbedingungen nicht vermeidbar. Durch die albitische Mikrosperrschicht, die das Grobkorn umgibt, wird die Einwanderung des Natriums in das Grobkorn stark verzögert. Das durch die albitische Mikro-Sperrschicht umhüllte Grobkorn ist aber gegenüber der Einwanderung des Natriums geschützt. Außerdem wird das Grobkorn von dem Feinkorn festgehalten, so daß es an einem Ablösen und Aufschwimmen gehindert ist. Darüberhinaus liegen hier Albit und Nephelin, das sich unter Langzeitbedingungen doch bildet, nebeneinander vor. Damit werden die Ausdehnungskoeffizienten, die vergleichsweise eng beieinander liegen, genutzt, um Abplatzungen zu unterdrücken.

Der Werkstoff kann den Feinkornbereich in einem Anteil von 50 bis 65 Gew.-%, insbesondere etwa 60 Gew.-%, aufweisen. Wie ersichtlich ist damit der Feinkornanteil relativ hoch gewählt. Normalerweise besitzt ein solcher Schamottestein etwa 30 bis 35 Gew.-% Feinkornanteil. Mit diesem bewußt hoch gewählten Feinkornanteil wird mehr Potential für die Glasphase bereitgestellt, um länger als Mikro-Sperrschicht für das Natrium wirken zu können. Hieraus ergibt sich eine Erhöhung der Einsatzdauer des Schamottesteins. Wichtig ist es jedoch, den Feinkornanteil immer im Zusammenhang mit dem Grobkornanteil einzusetzen. Auf das Grobkorn kann also nicht verzichtet werden.

Der Werkstoff kann einen Mittelkornbereich > 0,075 mm und < 1,500 mm in einem Anteil von bis zu 15 Gew.-%, insbesondere 6 Gew.-%, aufweisen. Obwohl es erfindungsgemäß im wesentlichen auf das Zusammenspiel von Feinkornbereich und Grobkornbereich ankommt, ist die Verwendung eines Mittelkornbereiches nicht schädlich. Dieser Mittelkornbereich kann sich aus Überkorn des Feinkornanteils und Unterkorn des Grobkornbereiches bilden. Der Mittelkornbereich sollte jedoch möglichst klein gehalten werden, damit sich die Kombination des Feinkornbereiches mit dem Grobkornbereich deutlich ausbilden kann.

Der Werkstoff kann im Mittelkornbereich > 0,075 mm und < 1,500 mm einen Anteil von 40 bis 65 Gew.-% SiO₂ und 60 bis 35 Gew.-% Al₂O₃ aufweisen. Der Mittelkornbereich ist ähnlich oder gleich dem Grobkornbereich aufgebaut. Der Mittelkornbereich zielt auf die Verbesserung der Festigkeit und Porosität ab. Der Mittelkornbereich dient als Puffer oder Übergangsbereich zwischen Feinkornbereich und Grobkornbereich.

Der Feinkornbereich des Werkstoffs kann aus mindestens zwei Rohstoffkomponenten aufgebaut sein. Insbesondere kann die eine Rohstoffkomponente aus SiO₂-reichem Ton und die andere Rohstoffkomponente aus Alkalialumosilikat bestehen. Aber auch andere Rohstoffe können sinnvoll miteinander kombiniert werden.

Wenn der Feinkornbereich zusätzlich amorphes SiO₂ in feinverteilter Form enthält, begünstigt dies die Bildung einer SiO₂-reichen Glasphase.

Ein erfindungsgemäßes Verfahren zur Herstellung eines solchen Schamottesteins sieht vor, daß ein blockartiger Grundkörper aus einem Werkstoff des Systems Al₂O₃ - SiO₂ geformt, getrocknet, gebrannt und auf Endmaß geschliffen wird, wobei der Werkstoff aus einem zunächst getrennt aufbereiteten Feinkornbereich und einem zunächst ebenfalls getrennt aufbereiteten Grobkornbereich aufgebaut und sodann homogen gemischt wird.

Es werden Schüttgewichte von

| | |
|---|---|
| Ton | ≥ 500 g/l, |
| Feldspat | ≥ 700 g/l und |
| Mikrosilika | ≥ 300 g/l |

eingesetzt.

In der nachfolgenden Tabelle wird die Erfindung weiter erläutert. Bei dem Ausführungsbeispiel 1 ist der Al₂O₃-Anteil im Feinkorn mit 21 % relativ gering und dementsprechend der SiO₂-Anteil mit 78 % relativ hoch. Es liegen ca. 5 % Verunreinigungen vor. Im Grobkornbereich ist der Al₂O₃-Anteil mit 36 % relativ hoch gewählt. Das Verhältnis von Feinkornanteil zu Grobkornanteil beträgt 61:34. Der damit hergestellte Stein besitzt eine hervorragende Kaltdruckfestigkeit (KDF). Der Al₂O₃-Anteil im gesamten Stein ist mit 25 % relativ niedrig. Die Neigung zu Abplatzerscheinungen ist gering.

Bei dem Beispiel 2 wird im Feinkornbereich ein noch vergleichsweise höherer Al₂O₃-Gehalt mit 23 % angewendet. Im Grobkornbereich ist der Al₂O₃-Anteil relativ hoch, so daß der Stein insgesamt etwa 35 % Al₂O₃ enthält.

Bei dem Ausführungsbeispiel 3 wird der Feinkornbereich und der Grobkornbereich in etwa annähernd gleichen Anteilen eingesetzt. Hieraus ergibt sich am Stein ein Al₂O₃-Anteil von ca. 40 %. Der SiO₂-Anteil liegt bei diesem Stein im unteren Bereich. Auch bei diesem Stein tritt vorteilhaft eine vergrößerte Einsatzmöglichkeit auf.

| | **1** | **2** | **3** |
|---|---|---|---|
| Feinkorn 78 % SiO₂ 21 % Al₂O₃ | 61 | - | - |
| Grobkorn 62 % SiO₂ 36 % Al₂O₃ | 34 | - | - |
| Feinkorn 76 % SiO₂ 23 % Al₂O₃ | - | 61 | - |
| Grobkorn 39 % SiO₂ 60 % Al₂O₃ | - | 35 | - |
| Feinkorn 75 % SiO_{2 24 %} Al₂O₃ | - | - | 52 |
| Grobkorn 39 % SiO₂ 61 % Al₂O₃ | - | - | 45 |
| Rohdichte (g/cm³) | 2,05 | 2,10 | 2,12 |
| offene Poren (Vol %) | 21 | 22 | 24 |
| KDF (MPa) | 45 | 35 | 40 |
| GDL (nPm) | 1,5 | 2,5 | 2,0 |
| Youngs modulus (CPa) | 0,50 | 0,40 | 0,45 |
| Al₂O₃ | 25,2 | 35,3 | 39,6 |
| SiO₂ | 68,5 | 59,7 | 55,9 |
| TiO₂ | 2,0 | 2,1 | 2,1 |
| Fe₂O₃ | 1,7 | 0,3 | 0,3 |
| Na₂O | 0,5 | 0,5 | 0,5 |
| K₂O | 0,9 | 0,4 | 0,3 |
| CaO | 0,3 | 0,2 | 0,2 |
| MgO | 0,5 | 0,2 | 0,2 |

## Patentansprüche

1. Großformatiger Schamottestein, insbesondere zinnbadbodenstein, aus einem Werkstoff des Systems Al₂O₃ - SiO₂, aus einem blockartigen Grundkörper mit einer mit dem Zinnbad in Kontakt kommenden Oberfläche, **dadurch gekennzeichnet, daß** der Werkstoff einen Feinkornbereich von < 0,075 mm mit > 65 Gew.-% SiO₂ und < 35 Gew.-% Al₂O₃ aufweist, der durch ein verringertes Al₂O₃-Angebot und ein vergrößertes Alkali- und Kieselsäure-Angebot zur Bildung einer Glasphase in diesem Feinkornbereich dient, und daß der Werkstoff einen Grobkornbereich von > 1,500 mm mit < 65 Gew.-% SiO₂ und > 35 Gew.-% Al₂O₃ aufweist.

2. Schamottestein nach Anspruch 1, **dadurch gekennzeichnet, daß** der Werkstoff den Feinkornbereich in einem Anteil von 50 bis 65 Gew.-%, insbesondere etwa 60 Gew.-%, aufweist.

3. Schamottestein nach Anspruch 1 oder 2, **dadurch gekennzeichnet, daß** der Werkstoff den Feinkornbereich in einem Anteil von > 50 Gew.-% mit etwa 65 bis 95 Gew.-% SiO₂ und 35 bis 5 Gew.-% Al₂O₃ und den Grobkornbereich mit etwa 35 bis 65 Gew.-% SiO₂ und etwa 65 bis 35 Gew.-% Al₂O₃ aufweist.

4. Schamottestein nach einem der Ansprüche 1 bis 3, **dadurch gekennzeichnet, daß** der Werkstoff einen Mittelkornbereich > 0,075 mm und < 1,500 mm in einem Anteil von bis zu 15 Gew.-%, insbesondere 6 Gew.-%, aufweist.

5. Schamottestein nach Anspruch 4, **dadurch gekennzeichnet, daß** der Werkstoff im Mittelkornbereich > 0,075 mm und < 1,500 mm einem Anteil von 40 bis 65 Gew.-% SiO₂ und 60 bis 35 Gew.-% Al₂O₃ aufweist.

6. Schamottestein nach einem der Ansprüche 1 bis 5, **dadurch gekennzeichnet, daß** der Feinkornbereich des Werkstoffs aus mindestens zwei Rohstoffkomponenten aufgebaut ist.

7. Schamottestein nach Anspruch 6, **dadurch gekennzeichnet, daß** das die eine Rohstoffkomponente aus SiO₂-reichem Ton und die andere Rohstoffkomponente aus Alkalialumosilikat besteht.

8. Schamottestein nach Anspruch 7, **dadurch gekennzeichnet, daß** der Feinkornbereich zusätzlich amorphes SiO₂ in feinverteilter Form enthält.

9. Verfahren zur Herstellung eines Schamottesteins nach einem oder mehreren der Ansprüche 1 bis 8, indem ein blockartiger Grundkörper aus einem Werkstoff des Systems Al₂O₃ - SiO₂ geformt, getrocknet, gebrannt und auf Endmaß geschliffen wird, **dadurch gekennzeichnet, daß** der Werkstoff aus einem zunächst getrennt aufbereiteten Feinkornbereich von < 0,075 mm mit > 65 Gew.-% SiO₂ und < 35 Gew.-% Al₂O₃ und einem zunächst ebenfalls getrennt aufbereiteten Grobkornbereich von > 1,500 mm mit < 65 Gew.-% SiO₂ und > 35 Gew.-% Al₂O₃ aufgebaut und sodann homogen gemischt wird.

10. Verfahren nach Anspruch 9, **dadurch gekennzeichnet, daß** Schüttgewichte von
| | |
|---|---|
| Ton | ≥ 500 g/l, |
| Feldspat | ≥ 700 g/l und |
| Mikrosilika | ≥ 300 g/l |
eingesetzt werden.

## Claims

1. Large format fireclay refractory brick, in particular tin bath bottom block, from a material of the Al₂O₃ - SiO₂ system with a block-shaped body having a surface contacting the tin bath, **characterized in that** the material includes a fraction of fine grains smaller than 0.075 mm including more than 65 percent by weight of SiO₂ and less than 35 percent by weight of Al₂O₃, which, due to an increased amount of alkali and of sliced acid and a decreased amount of Al₂O₃ forms a glassy phase in said fine grains fraction **and in that** the material includes a fraction of large grains larger than 1.500 mm including less than 65 percent by weight of SiO₂ and more than 35 percent by weight of Al₂O₃.

2. Fireclay refractory brick according to claim 1, **characterized in that** the material includes said fine grains in an amount of between 50 and 65 percent by weight, preferably of about 60 percent by weight.

3. Fireclay refractory brick according to claim 1 or 2, **characterized in that** the material includes said fine grains in an amount of more than 50 percent by weight with about 65 to 95 percent by weight of SiO₂ and 35 to 5 percent by weight of Al₂O₃, and a fraction of large grains with about 35 to 65 percent by weight of SiO₂ and 65 to 35 percent by weight of Al₂O₃.

4. Fireclay refractory brick according to any one of claims 1 to 3, **characterized in that** the material includes a fraction of middle grains larger than 0.075 mm and smaller than 1.500 mm in an amount of less than 15 percent by weight, in particular of 6 percent by weight.

5. Fireclay refractory brick according to claim 4, **characterized in that** the material of the fraction of middle grains larger than 0.075 mm and smaller than 1.500 mm includes 40 to 65 percent by weight of SiO₂ and 60 to 35 percent by weight of Al₂O₃.

6. Fireclay refractory brick according to any one of claims 1 to 5, **characterized in that** the fraction of fine grains of the material includes at least two raw material components.

7. Fireclay refractory brick according to claim 6, **characterized in that** one of the raw material components includes SiO₂-rich clay, **and in that** the other raw material component consists in an alkali alumino-silicate.

8. Fireclay refractory brick according to claim 7, **characterized in that** the fraction of fine grains further includes amorphous SiO₂ in finely distributed form.

9. Process for the manufacture of a fireclay refractory brick according to any one of claims 1 to 8, wherein the block-shaped body is formed from a material of the Al₂O₃ - SiO₂ system, dried, cured and machine-finished up to final size, **characterized in that** the material is formed from a fraction previously and separately prepared of fine grains smaller than 0.075 mm including more than 65 percent by weight of SiO₂ and less than 35 percent by weight of Al₂O₃ and from a fraction also previously and separately prepared of large grains larger than 1.500 mm including less than 65 percent by weight of SiO₂ and more than 35 percent by weight of Al₂O₃, which are then homogeneously mixed.

10. Process according to claim 9, **characterized in that** a powder density of larger or equal to 500 g/l for the clay, 700 g/l for the feldspar and 300 g/l for the microsilica is used.

## Revendications

1. Brique de chamotte de grand format, en particulier un bloc de sole pour bain d'étain, en un matériau faisant partie du système Al₂O₃ - SiO₂, avec un corps de base qui présente une surface venant en contact avec le bain d'étain, **caractérisée en ce que** le matériau présente une fraction de grains fins inférieurs à 0,075 mm avec plus de 65% en poids de SiO₂ et moins de 35% en poids d'Al₂O₃ qui, gräce à une offre réduite d'Al₂O₃ et une offre augmentée en alcalin et acide silicique, permet de former une phase vitreuse dans cette fraction de grains fins et **en ce que** le matériau présente une fraction de grains grossiers supérieurs à 1,500 mm avec moins de 65% en poids de SiO₂ et plus de 35% en poids d'Al₂O₃.

2. Brique de chamotte selon la revendication 1, **caractérisée en ce que** le matériau présente la fraction de grains fins en une quantité de 50 à 65% en poids, de préférence d'environ 60% en poids.

3. Brique de chamotte selon la revendication 1 ou 2, **caractérisée en ce que** le matériau présente la fraction de grains fins en une quantité supérieure à 50% en poids avec environ de 65 à 95% en poids de SiO₂ et de 35 à 5% en poids d'Al₂O₃ et une fraction de grains grossiers avec environ de 35 à 65% en poids de SiO₂ et de 65 à 35% en poids de d'Al₂O₃.

4. Brique de chamotte selon l'une des revendications 1 à 3, **caractérisée en ce que** le matériau présente une fraction de grains moyens supérieurs à 0,075 mm et inférieurs à 1,500 mm en une quantité allant jusqu'à 15% en poids, de préférence, de 6% en poids.

5. Brique de chamotte selon la revendication 4, **caractérisée en ce que** le matériau dans la fraction de grains moyens supérieurs à 0,075mm et inférieurs à 1,500 mm présente une quantité de 40 à 65 % en poids de SiO₂ et de 60 à 35 % en poids d'Al₂O₃.

6. Brique de chamotte selon l'une des revendications 1 à 5, **caractérisée en ce que** la fraction de grains fins du matériau est composée d'au moins deux matières premières.

7. Brique de chamotte selon la revendication 6, **caractérisée en ce que** l'une des matières premières consiste en une argile riche en SiO₂ et l'autre matière première consiste en un aluminosilicate alcalin.

8. Brique de chamotte selon la revendication 7, **caractérisée en ce que** la fraction de grains fins comprend du SiO₂ amorphe additionnel sous forme finement distribuée.

9. Procédé pour la fabrication d'une brique de chamotte selon une ou plusieurs des revendications 1 à 8, dans lequel un corps de base en forme de bloc est formé en un matériau du système Al₂O₃ - SiO₂, est séché, cuit et rectifié aux dimensions finales, **caractérisé en ce que** le matériau est constitué à partir d'une fraction d'abord préparée individuellement de grains fins inférieurs à 0,075 mm avec plus de 65% en poids de SiO₂ et moins de 35% en poids de Al₂O₃ et d'une fraction également d'abord préparée individuellement de grains grossiers supérieurs à 1,500 mm avec moins de 65% en poids de SiO₂ et plus de 35% en poids de Al₂O₃ et est alors mélangée de façon homogène.

10. Procédé selon la revendication 9, **caractérisé en ce que** l'on met en oeuvre des densités en poudre de l'argile supérieure ou égale à 500 g/l, du feldspath à 700 g/l et de la microsilice à 300 g/l.
